# EUROPEAN PATENT APPLICATION

(11) **EP 4 461 453 A1**
(43) Date of publication of application: **13.11.2024**
(21) Application number: 23172706.6
(22) Date of filing: 11.05.2023
(51) Int. Cl.: B23K 26/03, B23K 26/122, B23K 26/146, B23K 26/14, B23K 26/36, B23K 26/70, B23K 31/00

(54) **VIBRATION SENSING FOR MACHINING A WORKPIECE WITH A LIQUID-JET-GUIDED LASER BEAM**

(71) Applicant: Synova S.A., 1266 Duillier (CH)
(72) Inventor: Braunmüller, Falk, 1032 Romanel-sur-Lausanne (CH); Diboine, Jérémie, 1020 Renens (CH); Zryd, Amédée, 1026 Denges (CH); Richerzhagen, Bernold, 1025 Saint-Sulpice (CH); Wasmer, Kilian, 1871 Choëx (CH); Shevchik, Sergey, 8032 Zürich (CH)
(74) Representative: Roth, Sebastian

(57) **Abstract**

This disclosure relates to an apparatus for machining a workpiece with a laser beam guided by a liquid jet. The apparatus comprises a nozzle for producing the liquid jet, at least one lens for coupling the laser beam into the liquid jet, and a housing enclosing at least the nozzle and having an aperture for providing the liquid jet onto the workpiece. A vibration sensor of the apparatus is attached to the housing, and is configured to measure at least a first vibration of the housing and/or a second vibration of the housing, the first vibration being caused by machining the workpiece, and the second vibration being caused by the liquid jet. Further, a processor of the apparatus is configured to determine, based on the first vibration and/or the second vibration, a first set of parameters related to machining the workpiece and/or a second set of parameters related to the liquid jet.

## Description

### TECHNICAL FIELD

The present disclosure relates to an apparatus and a method for machining a workpiece with a laser beam guided in and by a liquid jet. The disclosure provides the apparatus and method with the capability to sense vibrations of a housing of the apparatus, in order to derive parameters related to the apparatus in general, the liquid jet, and/or the machining process of the workpiece.

### BACKGROUND

Liquid-jet-guided laser processing apparatus are widely used in various industries for material removal applications, such as cutting, ablating, drilling, or marking. They offer high precision and speed, making them a popular choice for many machining and manufacturing processes. The accuracy and quality of a workpiece, which is machined with the liquid-jet-guided laser beam, depend on the proper functioning of the apparatus. Any malfunction of the apparatus or deviation from the expected performance may result in a lower-quality or damaged workpiece, or may even cause damage to the apparatus itself.

Therefore, it would be beneficial to analyse apparatus parameters or a state of machining the workpiece, in order to detect any such malfunction or deviation in time.

### SUMMARY

The present disclosure and its solutions are based further on the following considerations.

In a first approach, an exemplary apparatus for liquid-jet-guided laser processing is equipped with an acoustic sensor, which is used to sense an ambient sound while the apparatus is in use. Based on the output signal of the acoustic sensor, the apparatus can analyse for example the state of machining the workpiece or the machining depth, or if the liquid jet touches an object, in order to detect any irregularities in time.

For example, the acoustic sensor can be specifically designed to detect sound frequencies associated with material removal, wherein the detected sound may indicate the proper functioning of the apparatus. However, if the absence of the sound in the expected frequency band is detected, the apparatus may alert the operator to stop the processing and investigate any issues. The exemplary apparatus may also be able to determine and optimize working parameters of the apparatus based on detected sound, and may thereby improve the efficiency and accuracy of the apparatus.

However, it was observed for this approach, that the ambient sound sensing can be affected by environmental noise, making it challenging to differentiate between the sound produced by the machining with the liquidjet-guided laser beam and other background noises. The ambient sound sensing may also be impacted by factors such as distance, damping of sound inside the workpiece itself, atmospheric conditions, liquid splashing, and signal reflection, which may result in degradation of the signal quality. In addition, the ambient sound sensing may not be suitable for all types of workpieces or laser processing applications.

In view of the above, an objective is to provide an improved apparatus for machining a workpiece with a liquid-jet-guided laser beam, which does not suffer from the drawbacks mentioned above. For instance, an objective is to accurately and reliably determine one or more processing parameters of the apparatus, particularly parameters related to the workpiece machining process and/or the liquid jet. Based thereon, an objective is to improve the processing efficiency and reliability of the apparatus. Another objective is to enable various processing support applications, like breakthrough detection, backstrike protection, liquid jet quality monitoring, depth sensing during machining the workpiece, monitoring the machining efficiency, and/or optimizing working parameters of the apparatus.

These and other objectives are achieved by the solutions described in the independent claims. Advantageous implementations are described in the dependent claims.

A first aspect of this disclosure provides an apparatus for machining a workpiece with a laser beam guided by a liquid jet, the apparatus comprising: a nozzle configured to produce the liquid jet; at least one lens configured to couple the laser beam into the liquid jet; a housing, which encloses at least the nozzle and has an aperture for providing the liquid jet onto the workpiece; a vibration sensor attached to the housing; and a processor; wherein the vibration sensor is configured to measure at least a first vibration of the housing and/or a second vibration of the housing; wherein the first vibration is caused by machining the workpiece with the laser beam, and the second vibration is caused by the liquid jet; and wherein the processor is configured to determine, based on measuring the first vibration and/or the second vibration, a first set of parameters related to machining the workpiece and/or a second set of parameters related to the liquid jet.

The laser beam may exemplarily have a laser power in a range of 1-2000 W. The aperture of the nozzle may define a diameter of the liquid jet, and may have, for example, a diameter of 10-200 µm. The liquid jet may have, for example, a diameter of about 0.6-1 times the diameter of the aperture. The liquid jet may be a water jet, i.e., the liquid used by the apparatus may be water or a mix of water with chemicals. A pressure of the liquid jet maybe in a range of 50-800 bar. The housing may be, or may include, a coupling unit, in which the nozzle is arranged, and in which the laser beam is optically coupled into the liquid jet. For this, the lens does not have to be arranged in the coupling unit.

The vibrations sensor, because it is attached to the housing, is able to accurately and reliably measure the vibrations of the housing. The measurements may be unaffected by environmental noise, and may not be limited by distance, atmospheric conditions, or signal reflections. The vibrations measured by the vibration sensor may stem from sound, which is produced by machining the workpiece with the liquidjet-guided laser beam and/or by the liquid jet itself. This sound may be transported through the liquid jet to the housing. At least some parts of the sound would be difficult to measure over the air, for instance, if an acoustic sensor for ambient sound sensing was used and arranged in the vicinity of the apparatus. In contrast to ambient sound sensing, the vibration sensor of the apparatus of the first aspect is configured to perform directed listening to the workpiece machining and/or liquid jet sound.

Based on the sensed one or more vibrations, the processor of the apparatus is configured to determine the different sets of parameters, which are related to the workpiece machining and/or to the fluid jet. Each parameter sets may comprise one or more parameters. These parameters may be used by the processor to monitor the performance of the apparatus, particularly the machining process and/or the liquid jet. The processor may also adapt processing parameters and/or liquid jet parameters based thereon, in order to improve the efficiency of the apparatus. The determined parameters may also enable the processor to implement various processing support applications, for example, sensing a breakthrough of the laser beam through the workpiece, or stopping the machining in case of a breakthrough for decreasing the machining time or to protect items or components arranged behind the workpiece, or monitoring the liquid jet quality (e.g., a laminarity or a laminar length of the liquid jet, spray, photoacoustic effects, etc.), which is indicative of the workpiece machining quality, or determining a material removal depth in the workpiece, or determining a material removal rate of workpiece material, or aligning the liquid jet with respect to an object, or similar applications.

Notably, the housing on which the vibration sensor is provided is the housing which directly encloses the nozzle (e.g., the coupling unit), which may not be the machine housing of, for example, a liquid-jet-guided laser machine in which the apparatus is installed.

In sum, due to the vibration sensor mounted to the housing of the apparatus, and due to the specific configurations of the vibration sensor and the processor, an improved apparatus is provided by this disclosure.

In an implementation of the apparatus, the vibration sensor is further configured to measure a third vibration and/or a fourth vibration; the third vibration is caused by photoacoustics induced by the laser beam inside the housing, and the fourth vibration is caused by a movement and/or rotation of the housing; and the processor is configured to determine, based on measuring the third vibration and/or the fourth vibration, a third set of parameters related to the apparatus.

The photoacoustics may relate to interactions of the laser beam with components or with liquid located inside the housing, or with the housing itself, which cause the third vibration. The movement and/or rotation of the housing may be controlled by the processor and/or by a computerized numerical control (CNC) device of the apparatus, when machining the workpiece. The third parameter set may provide additional information to the processor, which it can use to improve the efficiency of the apparatus and/or implement process support applications.

In an implementation of the apparatus, the first vibration is based on a first sound, which is produced at the workpiece by machining the workpiece with the laser beam and is coupled to the housing via the liquid jet and liquid inside the housing; and/or the second vibration is based on a second sound, which is produced by the liquid jet and is coupled to the housing via the liquid jet and via the liquid inside the housing.

The vibration sensor may thus detect sound, which is transferred by (propagates in) the liquid jet and, for instance, by a liquid chamber of the housing, and causes the housing to vibrate. This enables a very accurate sensing of the sounds produced by the workpiece machining and/or liquid jet, and is accordingly beneficial for deriving the parameter sets.

In an implementation of the apparatus, the first vibration has a higher frequency than the first sound has in a gaseous atmosphere.

As the sound travels in or through the liquid, it has a higher frequency than the same sound would have in, for example, air, so that the vibration sensor may be configured to measure at a higher frequency than, for instance, an ambient sound sensor would be configured to. The frequency difference stems from the different medium (e.g., water vs. air), in which the sound propagates.

In an implementation, the apparatus further comprises a frequency filter arranged and configured to separate the first sound and/or the second sound travelling in the liquid jet from other sounds.

Thus, an even more accurate sensing of the first vibration and/or of the second vibration, particularly with less noise disturbance, can be achieved.

In an implementation of the apparatus, the laser beam is pulsed; and the vibration sensor is configured to measure an occurrence of the first vibration within a time frame, which is shorter than a time delay between two consecutive laser pulses of the pulsed laser beam.

Thus, the vibration may be attributed to individual laser pulses, or to a certain number of laser pulses. A correlation between vibration and laser pulse(s) enables the determination of specific parameters, like a length of the liquid jet, and thus the machining depth.

In an implementation of the apparatus, the laser beam is pulsed; and the processor is configured to determine a time difference between a first time, at which a particular laser pulse of the laser beam is generated, and a second time, at which a correlated occurrence of the first vibration is measured by the vibration sensor.

In an implementation of the apparatus, the processor is configured to calculate, based on the time difference, a distance between the nozzle and a point of incidence of the laser beam on the workpiece, and/or a distance between the aperture and the point of incidence.

Thus, the processor may calculate a laser pulse time and an arrival time of the sound, which is produced by that laser pulse and causes the vibration, and may then use the time-of-flight (time difference) to determine a distance to the liquid jet contact point.

In an implementation of the apparatus, the vibration sensor is attached to and in direct contact with an outside surface of the housing, or is attached to an adaptor that is mounted onto the outside surface of the housing.

The vibration sensor may thus measure the vibrations of the housing accurately, and/or may also be easily removed and reattached.

In an implementation of the apparatus, the housing comprises a first part and a second part, the first part being removably attached to the second part; the second part of the housing comprises the at least one lens; the first part of the housing comprises the nozzle and a liquid chamber situated above the nozzle; and the vibration sensor is arranged at the first part of the housing on the liquid chamber above the nozzle.

The first part may be the above-mentioned coupling unit of the apparatus, in which the laser light and the liquid jet are coupled, i.e., where the laser beam is inserted into the liquid jet, so that it is guided in the liquid jet by total internal reflection. The vibration sensor may be a contact sensor contacting an outer wall or an inner wall of the coupling unit or of the liquid chamber (e.g., a water chamber) in the coupling unit. As the vibration sensor is very close to the liquid, and the sounds that cause the vibrations of the housing are mainly transported through the liquid (jet), accurate and nearly noise-free sensing is achieved.

In an implementation of the apparatus, at least one parameter of the first set is indicative of one or more of the following: a material type of the workpiece; a material removal velocity or a material removal rate of removing workpiece material by machining the workpiece with the laser beam; whether the laser beam has broken through the workpiece.

In an implementation of the apparatus, the processor is configured to determine, based on whether the first vibration is measured by the vibration sensor or not, whether the liquid jet touches the workpiece or not.

In an implementation of the apparatus, at least one parameter of the second set is indicative of one or more of the following: a jet quality of the liquid jet and/or a laminar length of the liquid jet; a flow characteristic of the liquid jet; whether the laser beam impinges onto the nozzle or not; whether the liquid jet touches the edge of a collision object arranged in the vicinity of the workpiece or touches the workpiece itself.

This concept of sensing (also referred to as hearing) whether the liquid jet touches the workpiece, or whether the liquid jet is free, or whether the liquid jet has broken through the workpiece, is very helpful for controlling the workpiece machining process, and for achieving an accurate machining result. With the collision object, the processor may be configured to detect a liquid jet position and/or a liquid jet angle.

In an implementation, the apparatus further comprises: an acoustic transducer, which is arranged and configured to send a sound wave through the liquid jet onto the workpiece; wherein the vibration sensor is further configured to measure a third vibration, which is caused by the sound wave being reflected back from the workpiece through the liquid jet into the housing.

Thus, the apparatus is also enabled to actively send sound waves and sense their reflection, for instance, to measure a time-of-flight of the sound waves, and determine a corresponding distance.

In an implementation, the apparatus further comprises: one or more photosensors, which are respectively configured to detect a first radiation or a second radiation; wherein the first radiation is caused by machining the workpiece with the laser beam, and the second radiation is caused by the laser beam being guided in the liquid jet or by machining the workpiece with the laser beam; wherein the first radiation comprises at least one of: laser light of the laser beam reflected from the workpiece, and a secondary radiation emitted by a portion of the workpiece that is machined with the laser beam; and wherein the processor is configured to determine the first set and/or the second set of parameters based additionally on measuring the first radiation and/or the second radiation.

The additional radiation signals may allow the processor to determine the parameters of the various parameters sets with an even better accuracy and reliability.

In an implementation of the apparatus, the second radiation comprises at least one of: a secondary radiation generated by scattering, for example Raman scattering, of the laser beam in the liquid jet; laser light of the laser beam scattered in the liquid jet; and a fluorescence of the liquid of the liquid jet induced by the laser beam; secondary machining light at other wavelength than the laser light, for instance, thermal radiation or infrared radiation.

In an implementation of the apparatus, the processor is further configured to: fuse respective output signals of the vibration sensor and the one or more photosensors, wherein the output signals are generated based on the measured first and/or second vibrations and the measured first and/or second radiations; and determine the first set and/or the second set based on the fused output signals.

In an implementation of the apparatus, the processor comprises a trained model or a rule-based algorithm, and is configured to input the output signals into the trained model or a rule-based algorithm; and the trained model is configured to fuse the output signals, and to determine the first set and/or the second set based on the fused output signals.

The rule-based algorithm maybe installed in the processor, and maybe carried out by the processor. The trained model may be a trained neural network, for instance, convolutional neural network (CNN). The neural network may be a deep neural network (DNN). The use of the trained model may improve the accuracy of the detected parameters, and may automatically optimized various working parameters of the apparatus, to achieve improved processing results.

In an implementation of the apparatus, the processor is further configured to adapt at least one working parameter of the laser beam and/or of the liquid jet based on the determined first set and/or second set of parameters.

A second aspect of this disclosure provides a method for machining a workpiece with a laser beam guided by a liquid jet, the method comprising: producing a liquid jet with a nozzle; coupling the laser beam into the liquid jet with at least one lens; measuring at least a first vibration and/or a second vibration of a housing, which encloses the nozzle; wherein the first vibration is caused by machining the workpiece with the laser beam, and the second vibration is caused by the liquid jet; and determining, based on measuring the first vibration and/or the second vibration, a first set of parameters related to machining the workpiece and/or a second set of parameters related to the liquid jet.

In an implementation, the method further comprises modifying at least one working parameter of the laser beam and/or of the liquid jet based on the determined first set and/or second set of parameters.

The method of the second aspect achieves the same advantages as the apparatus of the first aspect, and may be extended by respective implementations corresponding to the implementations described above for the apparatus of the first aspect.

A third aspect of this disclosure provides a computer program comprising instructions for controlling the apparatus according to the first aspect, when the instructions are executed by the processor, or for performing the method according to the second aspect, when the instructions are executed by a computer.

### BRIEF DESCRIPTION OF THE DRAWINGS

The above described aspects and implementations are explained in the following description of embodiments with respect to the enclosed drawings:
- FIG. 1: shows an exemplary apparatus according to this disclosure.
- FIG. 2: shows an exemplary apparatus according to this disclosure with a two-part housing.
- FIG. 3: illustrates a working principle of an apparatus according to this disclosure.
- FIG. 4: shows an exemplary apparatus according to this disclosure with additional components for vibration sensing and optical sensing.
- FIG. 5: shows an exemplary processor of an apparatus according to this disclosure, which is capable of signal fusion.
- FIG. 6: shows an exemplary apparatus according to this disclosure with an acoustic transducer.
- FIG. 7: shows a method according to this disclosure.
- FIG. 8: shows an apparatus according this disclosure inside a liquid-jet-guided laser machine.
- FIG. 9: shows an exemplary algorithm for signal fusion using a rule-based algorithm, which may be performed by a processor of an apparatus according to this disclosure.

### DETAILED DESCRIPTION OF EMBODIMENTS

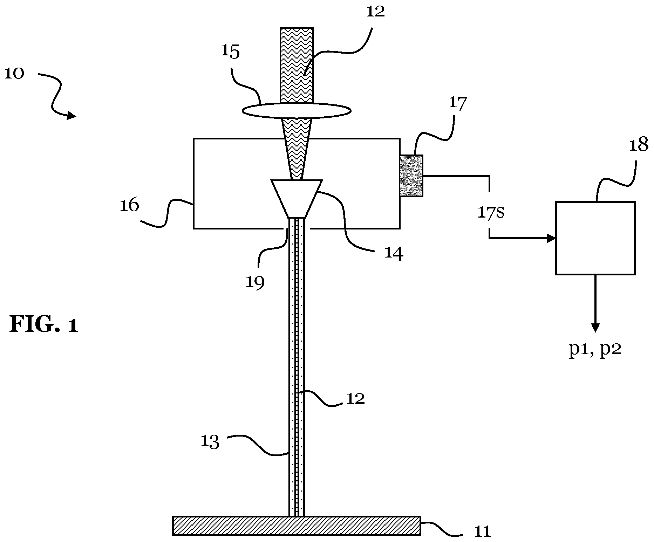

FIG. 1 shows a basic implementation of an apparatus 10 according to this disclosure. The apparatus 10 is configured to machine a workpiece 11 with a laser beam 12, wherein the laser beam 13 is guided in and by a liquid jet 13, for instance, in and by a water jet. The workpiece 11 may be a made of one or more materials including, for example, metals, ceramics, diamonds, semiconductors, carbides, alloys, superalloys, or ultra-hard materials. The workpiece 11 is not a part of the apparatus 10, however, the workpiece 11 can be positioned on a machining surface, which may or may not be a part of the apparatus 10. In either case, the apparatus 10 can be arranged such that it can machine the workpiece 11 that is disposed on the machining surface. The apparatus 10 may also control movements of the machining surface in up to three dimensions, or may control movements of the liquid-jet guided laser beam relative to the workpiece 11, for instance, by moving and/or rotating a nozzle or the housing producing the liquid jet 13.

The apparatus 10 comprises a nozzle 14, comprises at least one lens 15, and comprises a housing 16. The housing 16 encloses at least the nozzle 14, and optionally encloses also the at least one lens 15. The housing 16 has an aperture 19 for ejecting the liquid jet 13 and for providing it onto the workpiece 11. The nozzle 14 may be provided with the liquid, so as to form the liquid jet 13, via a liquid supply, which may comprise a channel through the housing 16. Also a gas supply may be provided, which may comprise another channel through the housing 16, and a protection gas, for example helium, may be supplied by the gas supply into the housing 16, particularly to an area that is passed by the generated fluid jet 13 after leaving the nozzle 14. Here, the protection gas can protectively envelop the fluid jet 13, before the fluid jet 13 is ejected from the housing 16.

The at least one lens 15 is configured to couple the laser beam 12 into the liquid jet 13, for instance, it may focus the laser beam 12 into the nozzle 14. The at least one lens 15 may be exactly one lens or may be a group of lenses. The at least one lens 15 may be arranged inside or outside of the housing 16. Preferably, the at least one lens 15 is separated from the liquid inside the housing 16, which may be achieved by an optical window that prevents contact of the lens 15 and the liquid and/or by a multi-chamber housing.

The apparatus 10 further comprises a vibration sensor 17 and a processor 18. The vibration sensor 17 is attached to the housing 16, for instance, from the outside as shown, or from the inside. The vibration sensor 17 may be directly attached to the housing or indirectly, for instance, using an adaptor. The processor 18 may be arranged outside of the housing 16.

The vibration sensor 17 is configured to measure vibrations of the housing 16. The vibration sensor 17 is particularly configured to measure at least a first vibration of the housing 16 and/or a second vibration of the housing 16. The first vibration is caused by machining the workpiece 11 with the laser beam 12, and the second vibration is caused by the liquid jet 13. The vibration sensor 17 may also be configured to measure additional vibrations, for instance, a third vibration and/or a fourth vibration of the housing 16. For example, the third vibration may be caused by photoacoustics induced by the laser beam 12 inside the housing 16. For example, the fourth vibration may be caused by a movement and/or rotation of the housing 16. Each vibration is related to a certain frequency of frequency range, wherein the frequencies or frequency ranges are different for different vibrations. The vibration sensor 17 may be adapted to detect vibrations specifically at these frequencies (of vibration) or in these frequency ranges. The vibration sensor 17 may output a signal 17s, which may reflect or indicated the detected vibrations.

The processor 18 is configured to determine, based on measuring the first vibration and/or the second vibration, a first set of parameters p1 related to machining the workpiece 11 and/or a second set of parameters p2 related to the liquid jet 13. The processor 18 may receive the output signal 17s from the vibration sensor 17, which may indicate the result of the vibration measurement of the vibration sensor 17. The signal 17s may indicate that the first vibration was measured, or may indicate either whether the first vibration was measured or whether it was not measured. The processor 18 may be configured to determine the first set of parameters p1 based on the occurrence of the first vibration and/or based on the absence of the first vibration. Further, the processor 18 may be configured to determine the second set of parameters p2 based on the occurrence of the second vibration and/or based on the absence of the second vibration. The processor 18 can be further configured to determine additional sets of parameters, for instance, a third set of parameters related to the apparatus 10, for example, based on the occurrence of the third vibration and/or the fourth vibration, or the absence of any or both of these vibrations.

By detecting the respective vibrations, the apparatus 10 may be able to determine certain process conditions of machining the workpiece 11, and may use them for different optimizations of processing support applications (e.g. efficiency optimization, breakthrough detection, or other applications as mentioned above). The apparatus 10 may be able to perform depth sensing, i.e., may determine coordinates of a contact point of the liquid jet 13 and the workpiece 11, which may be within a hole or crated of the workpiece 11. For instance, the apparatus 10 can determine a time of occurrence of a vibration to this end. For example, if the laser beam 12 is pulsed, the processor 18 may determine a time difference between a first time, at which a particular laser pulse of the laser beam 12 is generated, and a second time, at which a correlated occurrence of the vibration is measured by the vibration sensor 17. However, the apparatus 10 may also sense a vibration over time and correlate with pulse parameters, like pulse width, pulse duration, pulse power etc. over this time.

Notably, the vibrations of the housing 16 may be caused by different kinds of sound, which are produced, for example, at the workpiece 11 by machining the workpiece 11 with the laser beam 12, or by the liquid jet 13 itself. These sounds may be transported to the housing 16, so as to vibrate the housing 16, via the liquid jet 13 and also via liquid located inside the housing 16. Some sound components of these sounds may also be transported over air paths to the vibration sensor 17, for instance, if the vibration sensor 17 is attached to an outside of the housing. However, the liquid paths transporting the sounds to the housing 16 are usually of better quality.

The processor 18 may comprise processing circuitry (not shown) configured to perform, conduct or initiate the various operations of the processor 18 described herein. The processing circuitry may comprise hardware and/or the circuitry may be controlled by software. The hardware may comprise analog circuitry or digital circuitry, or both analog and digital circuitry. The digital circuitry may comprise components such as application-specific integrated circuits (ASICs), fieldprogrammable arrays (FPGAs), digital signal processors (DSPs), or multi-purpose processors. The processor 18 may further comprise memory circuitry, which stores one or more instruction(s) that can be executed by the processing circuitry, in particular under control of the software. For instance, the memory circuitry may comprise a non-transitory storage medium storing executable software code which, when executed by the processing circuitry, causes the various operations of the processor 18 to be performed.

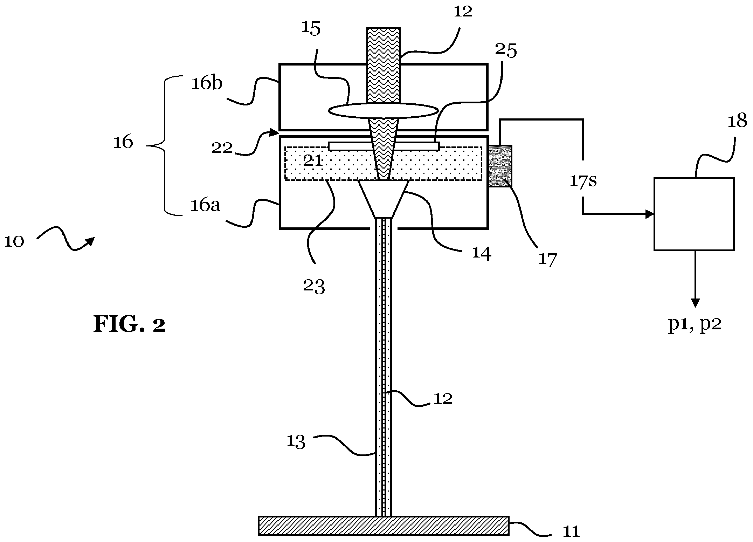

FIG. 2 shows an implementation of the apparatus 10 according to this disclosure, which builds on the apparatus 10 shown in FIG. 1. Same elements in FIG. 1 and FIG. 2 are labelled with the same reference signs, function likewise, and may thus not be described again.

As shown in FIG. 2, the housing 16 of the apparatus 10 comprises a first part 16a and a second part 16b. The first part 16a is removably attached to the second part 16b, for instance, by a mechanical or a magnetic connection. The second part 16b of the housing 16 comprises the at least one lens 15, and the first part 16a of the housing 16 comprises the nozzle 14 and a liquid chamber 21, which is formed above the nozzle 14. The first part 16a may be the above-described coupling unit of the apparatus 10, because here the laser beam 12 is coupled into the liquid jet 13. The first part 16a and the second part 16b, when they are attached to each other, may be separated from each other by their housing walls 22, which may respectively include an optical window, or they may be transparent walls 22. The liquid chamber 21 may be defined in the first part 16a by an internal wall 23, which may include a window 25 for coupling the laser beam 12 into the liquid chamber 21 and the nozzle 14. Notably, the housing 16 may also comprise more than two parts 16a, 16b.

In the implementation of the apparatus 10 shown in FIG. 2, the vibration sensor 17 is exemplarily arranged on the outside surface of the housing 16, specifically, on the outside of the first part 16a of the housing 16. The vibration sensor 17 could, however, as well be located on the outer wall of the liquid chamber 21 above the nozzle 14, i.e., inside the first part 16a of the housing 16. The vibration sensor 17 could also be arranged on the inside surface of the housing 16, specifically, the inside of the first part 16a of the housing 16. The vibration sensor 17 may be an acoustic microphone. The sound that causes the vibrations of the housing 16, which the vibration sensor 17 measures, may come from its original sound source via the liquid jet 13 and the liquid chamber 21 to the housing 16 and sensor 17.

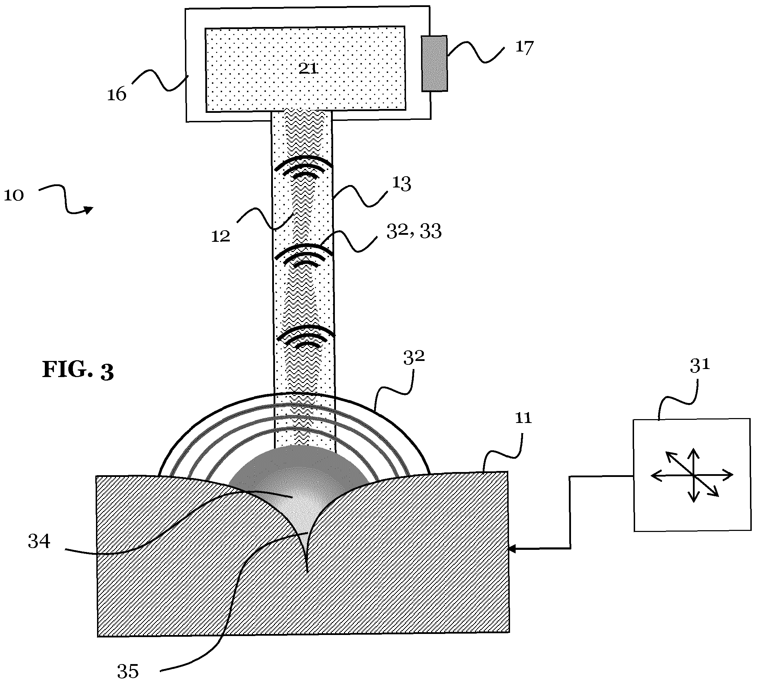

FIG. 3 illustrates a working principle of the apparatus 10 of this disclosure, and exemplary sounds and vibrations that can be produced and detected by the vibration sensor 17 of the apparatus 10.

For example, a first sound 32 may be produced at the workpiece 11 by machining the workpiece 11 with the laser beam 12. The first sound 32 may particularly be produced by the laser beam 12 as it cuts or drills into the workpiece 11, whereby it may create a plasma 34 in a crater 35 formed in the workpiece 11. The first sound 21 may be acoustic (shock) waves, which are created by laser pulses of the laser beam 12 on the workpiece 11. The acoustic waves may at least partly travel through the liquid jet 13 and liquid inside the housing 16, and may couple to the housing 16, wherein the vibration sensor 17 is configured to measure it as the first vibration of the housing 16. As another example, a second sound 33 may be produced by the liquid jet 13 itself, wherein the second sound may similarly be coupled to the housing 16 at least partly via the liquid jet 13 and via the liquid inside the housing 16, wherein the vibration sensor 17 is configured to measure it as the second vibration of the housing 16. Notably, the first vibration has a higher frequency than the first sound 32 has in a gaseous atmosphere, e.g., in air, due to the propagation of the sound and coupling to the housing 16 via the liquid and the housing material, and the second vibration has a higher frequency than the second sound 33 has in a gaseous atmosphere, e.g. in air for the same reason.

The processor 18 may, for example, determine a time-of-flight, in particular, may determine a time difference between a laser pulse of the laser beam 12 and an arrival of the correlated sound (i.e., the occurrence of a vibration) measured by the vibration sensor 17. In other words, the processor 18 may be configured to determine a time difference between a first time, at which a particular laser pulse of the laser beam 12 is generated, and a second time, at which a correlated occurrence of the respective vibration is measured by the vibration sensor 17. In this way, for instance, a depth of the crater 35 in the workpiece 11 may be estimated.

FIG. 3 also shows a movement axes controller 31 (e.g., a CNC device), which may move the workpiece 11 or a machining surface holding the workpiece 31, for instance, under control of the processor 18.

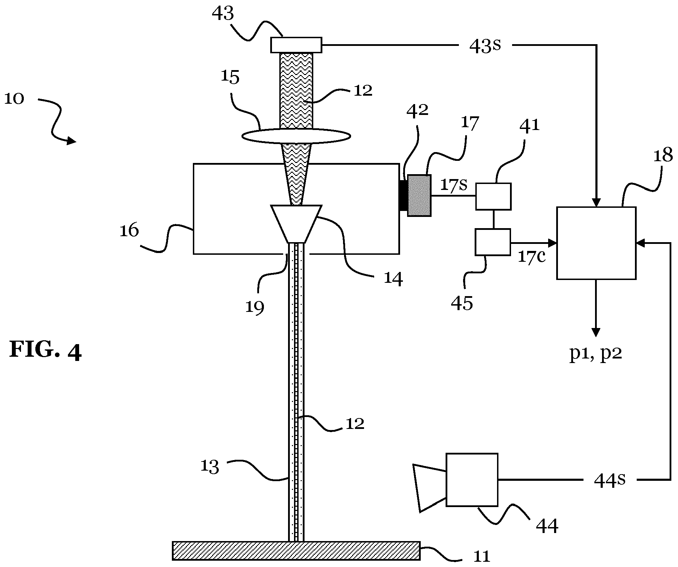

FIG. 4 shows an implementation of the apparatus 10, which builds on the implementation of the apparatus 10 shown in FIG. 1. Same elements in FIG. 1 and FIG. 4 are labelled with the same reference signs, function likewise, and may thus not be described again.

FIG. 4 shows that the apparatus 10 may further comprise a frequency filter 41, which is configured to separate the first sound 32 and/or the second sound 33 travelling in the liquid jet 13 (as shown in FIG. 3, for example) from other sounds. The frequency filter 41 may filter out certain sound frequencies, and may pass certain other sound frequencies of interest. The frequency filter 41 may, for instance, be arranged in a signal path of the signal 17s, for instance, on a signal cable, so as to filter out the certain frequencies from the electronic signal 17s by an electronic filter. In this case, a clean signal 17c is generated based on the signal 17s (as shown). Alternatively, the frequency filter 41 may be integrated into the processor 18 for software filtering of the signal 17s.

Further, as FIG. 4 also shows, the apparatus 10 may comprise an adaptor 42, which allows attaching the vibration sensor 17 easily to the housing 16, and likewise removing it. The adaptor 42 may in this case be attached in direct contact to an outside surface of the housing 16, and the vibration sensor 17 is attached to the adaptor 42. This is different to, for example, the situation shown in FIG. 1, where the vibration sensor 17 is attached directly to the outside surface of the housing 16, or the situation shown in FIG. 2, where the vibration sensor 17 is shown to be attached directly to the outside surface of the first part 16a of the housing 16. Also an inside surface attachment of the vibration sensor 17 could be done via the adaptor 42. Moreover, the frequency filter 41 may be integrated into the adaptor 42, so as to filter signals (vibrations) before the sensing by the vibration sensor 17.

As FIG. 4 additionally shows, the apparatus 10 may comprise an amplifier 45, which is included in the signal path of the signal 17s, for instance on the signal cable, in addition to the frequency filter 41. This amplifier 45 increases the signal amplitude to voltages that can be easier measured by the processor 18.

FIG. 4 also shows that the apparatus 10 can comprise one or more photosensors or detectors, for example one or both of the photosensors 43 and/or 44, wherein the first photosensor 43 is configured to detect a first radiation and the second photosensor 44 is configured to detect a second radiation. The first photosensor may be a sensor chip included in an enclosure (or the housing 16) of apparatus 10. The second photosensor 44 may be a camera 44 arranged outside the housing 16, for instance, close to the workpiece 11. The first radiation may, for example, be caused by machining the workpiece 11 with the laser beam 12. The first radiation may be secondary radiation (i.e., not laser light), which is generated by machining the workpiece 11, for instance, emitted by the plasma 34 shown in FIG. 3. The first radiation could alternatively be reflected laser light. The second radiation may, for example, be caused by the laser beam 12 guided in the liquid jet 13. The second radiation may, for instance, be secondary radiation (not the laser beam 13), which is generated by (e.g., Raman) scattering of the laser beam 12 in the liquid jet 13. The second radiation may alternatively also be laser light of the laser beam 12 scattered in the liquid jet 13.

At least one of the photosensors 43, 44, for instance, the first photosensor 43 in FIG, 4, may be arranged such that it is able to receive the first radiation through the liquid. That is, the first radiation propagates away from the workpiece 11 through and in the liquid jet 13, and optionally through the at least one lens 15. That is, the first radiation may be guided in the liquid jet 13 similar to the laser beam 12. The apparatus 10 may also include one or more spectral separation units, wherein each spectral separation unit (e.g., optical filter) may be configured to isolate only electromagnetic radiation of interest - including the first or second radiation - on respectively the first or second photosensor 43 or 44.

The processor 18 of the apparatus 10 in FIG. 4 may be further configured to take into account output signals 43s and/or 44s provided by the photosensors 43 and/or 44, when determining the first set p1 and/or the second set p2 of parameters. These signals 43s and 44s may respectively indicated the occurrence of the first and/or the second radiation.

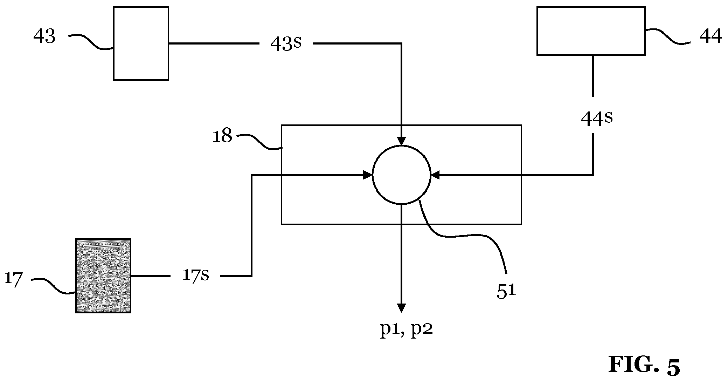

FIG. 5 shows an exemplary processor 18 of the apparatus 10. The processor 18 of FIG. 5 is configured to perform signal fusion. That is, the processor 18 may, as an example, fuse the output signals 17s (or signal 17c, if the signal 17s is frequency filtered), 43s, 44s of the vibration sensor 17 and of the first and second photosensors 43, 44, respectively (see FIG. 4). Fusing may imply calculating a fused signal from the output signals 17s, 43s, 44s, for instance, by combining and optionally weighting them. As mentioned above, the output signals 17s (or 17c), 43s, and 44s may be generated based on the first vibration and/or the second vibration, and respectively based on the first radiation and/or the second radiation. The processor 18 may for example determine the first set p1 and/or the second set p2 of parameters based on the fused output signals 17s, 43s, 44s.

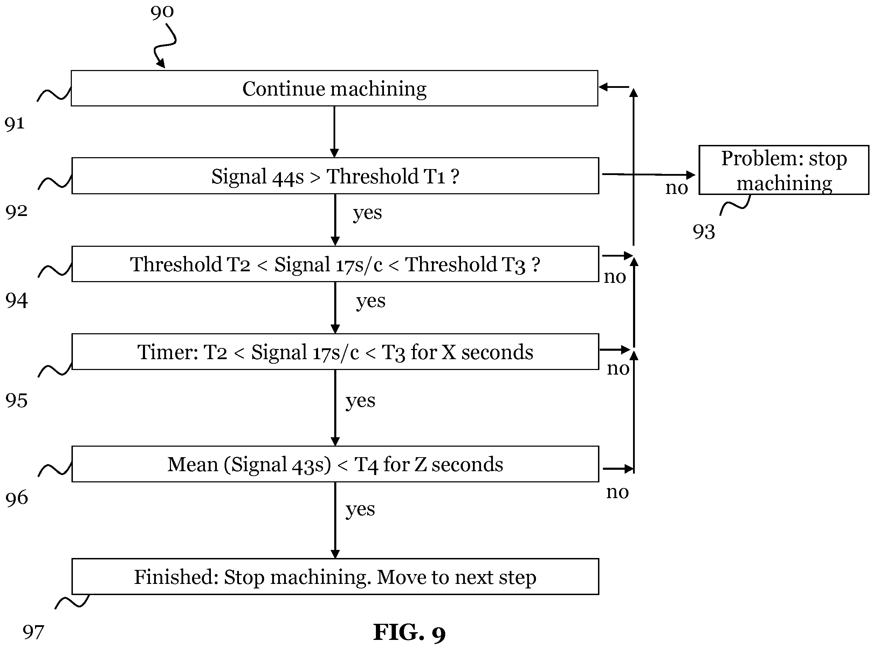

To this end, the processor 18 may comprise and/or may be adapted to carry out a rule-based algorithm, which fuses decisions based on the output signals 17s (or 17c), 43s, 44s, using different kinds of signal characteristics or thresholding. An example is shown in FIG. 9 and explained below.

Alternatively, the processor 18 may comprise and employ a trained model 51 (as shown), for example, a neural network. This trained model 51 may be configured to receive the output signals 17s (or signal 17c, if the signal 17s is frequency filtered), 43s, 44s. The trained model 51 may be trained to fuse the output signals 17s (or 17c), 43s, 44s, and may be trained to determine the first set p1 and/or the second set p2 of the parameters based on a result of the fusion. The trained model 51 may have been trained in a supervised manner, for instance, by letting it determine known parameter sets based on the output signals, and then correcting it. The trained model 51 may also be trained in an unsupervised manner. The trained model may be trained further during the use of the apparatus 10.

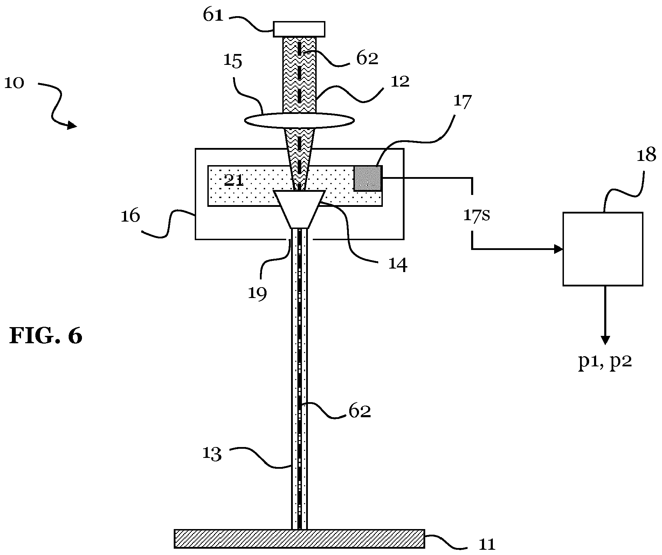

FIG. 6 shows an implementation of the apparatus 10, which builds on the implementation of the apparatus 10 shown in FIG. 1. Same elements in FIG. 1 and FIG. 6 are labelled with the same reference signs, function likewise, and may thus not be described again.

Fig. 6 also shows an implementation, in which the vibration sensor 17 is placed inside the liquid chamber 21 of the housing 16 (for instance, inside the first part 16a as shown in FIG. 2). The vibration sensor 17 may be configured to measure the vibration of the liquid, which is coupled into the housing 16. As the vibration sensor 17 is inside the housing 16 in this implementation, it may be shielded against outside ambient noise.

As also shown in FIG. 6, the apparatus 10 may in an implementation further comprise an acoustic transducer 61, which is arranged and configured to send sound waves 62 through the liquid jet 13 (so that they are guided in the liquid jet 13) onto the workpiece 11. The sound waves 62 may travel a similar path as the laser beam 12 when machining the workpiece (not shown in FIG. 6). Sound waves 62 and laser beam 12 may be provided alternatingly or simultaneously. The vibration sensor 17 may be further configured to measure a third vibration, which is caused by the sound waves 62 being reflected back from the workpiece 11 through and guided by the liquid jet 13 into the housing 16. With the acoustic transducer 61, the processor 18 may be able to determine a time-of-flight of the acoustic waves 62, and may derive a length of the fluid jet 12 or a distance between the housing 16 and the workpiece 11 from this time-of-flight, or similar geometrical parameters.

Notably, the additional features of the various (optional) implementations of the apparatus 10 shown in FIGs. 2-5 may be individually and in any combination added to the features of the basic implementation of the apparatus 10 shown in FIG. 1.

Each shown implementation of the apparatus 10 (FIGs. 1-6) may include a laser source and a laser controller for controlling the laser source. The laser source is in this case configured to supply the laser light for the laser beam 12. The laser source may also be an external device not included in the apparatus 10, but for supplying the laser light to a laser supply port of the apparatus 10, for example by an optical fiber. In the apparatus 10 the laser beam 12 may be directed, for example, by a beam splitter, towards the lens 15, which is used to couple the laser beam 12 into the fluid jet 13.

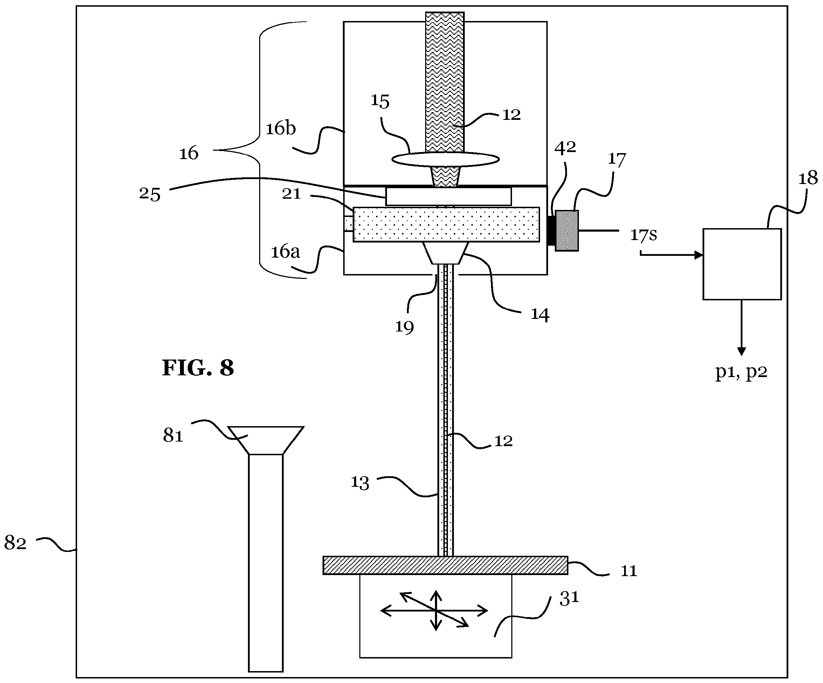

Each shown implementation of the apparatus 10 (FIGs. 1-6) may alternatively or additionally include one or more peripheral devices, like a fluid supply controller (may be optionally integrated with a fluid pump), a gas supply controller (for instance, for gas used to protectively surround the fluid jet 12), and a movement axes controller 31 (see FIG. 3 or FIG. 8, e.g., a CNC device), which may be configured to move a machining surface, onto which the workpiece 11 is put, or alternatively the workpiece 11 itself, in perpendicular x, y and z directions and/or rotational a, b, c directions.

The processor 18 maybe configured to provide respective instruction signals to the different peripheral devices of the apparatus 10. For instance, the processor 18 may be a controller that can control the laser controller, the fluid supply controller, the gas supply controller, and/or the movement axes controller via respective signals. The processor 18 may be configured to base the control of these devices on the first set of parameters p1 related to machining the workpiece 11, and/or on the second set of parameters p2 related to the liquid jet 13, and/or on the third set of parameters related to the apparatus 10. The processor 18 may be further configured to adapt at least one working parameter of the laser beam 12 and/or of the liquid jet 13, for instance, by controlling one or more of the devices accordingly, based on the first, the second, and/or the third set of parameters.

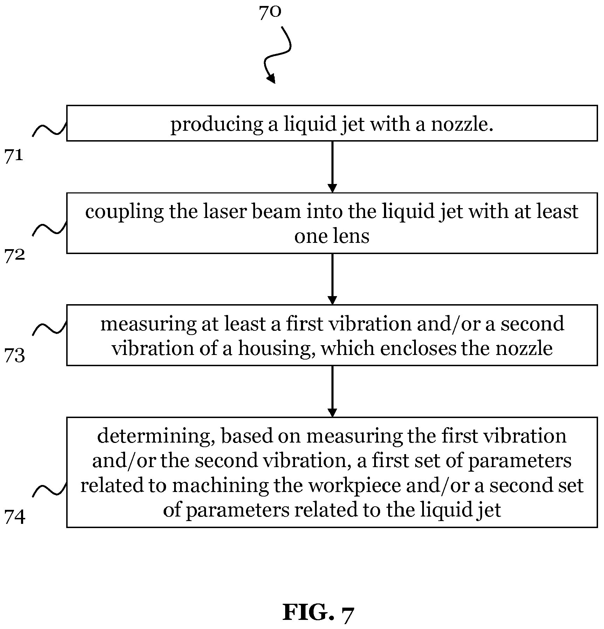

FIG. 7 illustrates a method 70 of this disclosure for machining a workpiece 11 with a laser beam 12 guided by a liquid jet 13. The method 70 comprises a step 71 of producing a liquid jet with a nozzle, and a step 72 of coupling the laser beam 12 into the liquid jet 13 with at least one lens 15. Further, the method 70 comprises a step 73 of measuring at least a first vibration and/or a second vibration of a housing 16, which encloses at least the nozzle 14. The first vibration is caused by machining the workpiece 11 with the laser beam 12, and the second vibration is caused by the liquid jet 13. The method 70 may then comprise a step 74 of determining, based on measuring the first vibration and/or the second vibration, a first set of parameters related to machining the workpiece 11 with the laser beam 12, and/or a second set of parameters related to the liquid jet 13.

Fig. 8 shows an implementation of the apparatus 10, which builds on the implementation of the apparatus 10 shown in FIG. 1. Same elements in FIG. 1 and FIG. 8 are labelled with the same reference signs, function likewise, and may thus not be described again.

As shown in FIG. 8 the apparatus 10 may be provided inside a liquid-jet-guided laser machine, wherein the liquid-jet-guided laser machine comprises a machine housing 82 (also referred to as outer housing). The machine housing 82 is notably not identical to the housing 16, onto which the vibration sensor 16 is placed. The housing 16 may be referred to as an inner housing 16 of the machine (as it is inside the machine housing 82), and is, for example, the coupling unit where the laser beam 12 is coupled into the liquid jet 13. In particular, the housing 16 is the enclosure that directly surrounds the nozzle 14 and optionally the lens 15 (e.g., in case of a first part 16a and second part 16b of the housing 16, as shown in FIG. 8). In other words, inside the housing 16 or the first part 16a of the housing 16, the nozzle 14 is not surrounded by yet another enclosure or housing. As also shown in FIG. 8, the liquid chamber 21 maybe situated inside the housing 16 or the first part 16a of the housing 16.

FIG. 8 also shows that the apparatus 10 may comprise a collision object 81, wherein the collision object 81 may be arranged adjacent to and/or in the vicinity of the workpiece 11. The at least one parameter of the second set p2, which the processor 18 can determine, may be indicative of whether the liquid jet 13 touches the edge of the collision object 81 or not. For example, by determining one or more positions (e.g., coordinates set by the CNC 31) at which the liquid jet 13 touches the collision object 81, and optionally further determining one or more positions at which the liquid jet 13 does not touch the collision object 81, the processor 18 may be able to determine a liquid jet position and/or a liquid jet angle (with respect to a predetermined axis), and may be further configured to perform a correction or alignment, e.g., with the predetermined axis, of the liquid jet 13. Fig. 9 shows an example for signal fusion using a rule-based algorithm 90. At the starting step 91 of the algorithm 90, the apparatus 10 is machining the workpiece 11 with the liquid-jet-guided laser beam.

At step 92, the algorithm 90 checks whether the signal 44s of the photosensor 44 is larger than a first threshold value (T1). If the signal 44s is larger than the first threshold value, the algorithm 90 proceeds to step 94, otherwise there is a problem and the machining maybe stopped automatically at step 93.

At step 94, the algorithm 90 checks whether the signal 17s of the vibration sensor 17 (or the frequency filtered signal 17c of the vibration sensor 17 after the frequency filter 41) is larger than a second threshold value (T2) and smaller than a third threshold value (T3). If this is the case, then the algorithm 90 proceeds to step 95. If this is not the case, then the machining is continued and the algorithm 90 returns to step 91.

At step 95, the algorithm 90 checks whether the signal 17s (or 17c) remains between the second and third threshold value (T2, T3) for at least X seconds. X may be selected by a user. The measurement of X may be done with a timer. If this is the case for at least X seconds, the algorithm 90 proceeds to step 96. If this is not the case for at least X seconds, then the machining is continued and the algorithm 90 returns to step 91.

At step 96, the algorithm 90 checks whether a mean of the signal 43s of the photosensor 43 is below a fourth threshold value (T4) for at least Z seconds. Z may be selected by a user, and may be equal to X. The measurement of Z may be done with a timer. If this is the case for at least Z seconds, the algorithm 90 proceeds to step 97. If this is not the case for at least Z seconds, then the machining is continued and the algorithm 90 returns to step 91.

At step 97, the processor 18 determines that the machining is finished, and may move on to the next step.

Notably, the steps 91-95 can also be executed simultaneously to analyze the machining and take a decision on the machining. As detailed above, such an algorithm 90 can also be used e.g. for optimizing the machining efficiency or creating a machining depth control.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. An apparatus (10) for machining a workpiece (11) with a laser beam (12) guided by a liquid jet (13), the apparatus (10) comprising:
a nozzle (14) configured to produce the liquid jet (13);
at least one lens (15) configured to couple the laser beam (12) into the liquid jet (13);
a housing (16), which encloses at least the nozzle (15) and has an aperture for providing the liquid jet (13) onto the workpiece (11);
a vibration sensor (17) attached to the housing (16); and
a processor (18);
wherein the vibration sensor (17) is configured to measure at least a first vibration of the housing (16) and/or a second vibration of the housing (16);
wherein the first vibration is caused by machining the workpiece (11) with the laser beam (12), and the second vibration is caused by the liquid jet (13); and
wherein the processor (18) is configured to determine, based on measuring the first vibration and/or the second vibration, a first set of parameters (p1) related to machining the workpiece (11) and/or a second set of parameters (p2) related to the liquid jet (13).

2. The apparatus (10) according to claim 1, wherein:
the vibration sensor (17) is further configured to measure a third vibration and/or a fourth vibration of the housing (16);
the third vibration is caused by photoacoustics induced by the laser beam (12) inside the housing (16), and the fourth vibration is caused by a movement and/or rotation of the housing (16); and
the processor (18) is configured to determine, based on measuring the third vibration and /or the fourth vibration, a third set of parameters related to the apparatus (10).

3. The apparatus (10) according to claim 1 or 2, wherein:
the first vibration is based on a first sound (32), which is produced at the workpiece (11) by machining the workpiece (11) with the laser beam (12) and is coupled to the housing (16) via the liquid jet (13) and liquid (21) inside the housing (16); and/or
the second vibration is based on a second sound (33), which is produced by the liquid jet (12) and is coupled to the housing (16) via the liquid jet (12) and via the liquid (21) inside the housing (16).

4. The apparatus (10) according to claim 3, wherein:
the first vibration has a higher frequency than the first sound (32) has in a gaseous atmosphere.

5. The apparatus (10) according to claim 3 or 4, further comprising:
a frequency filter (41) arranged and configured to separate the first sound and/or the second sound travelling in the liquid jet (13) from other sounds.

6. The apparatus (10) according to one of the claims 1 to 5, wherein:
the laser beam (12) is pulsed; and
the vibration sensor (17) is configured to measure an occurrence of the first vibration within a time frame, which is shorter than a time delay between two consecutive laser pulses of the pulsed laser beam (12).

7. The apparatus (10) according to one of the claims 1 to 6, wherein:
the laser beam (12) is pulsed; and
the processor (18) is configured to determine a time difference between a first time, at which a particular laser pulse of the laser beam (12) is generated, and a second time, at which a correlated occurrence of the first vibration is measured by the vibration sensor (17).

8. The apparatus (10) according to claim 7, wherein the processor (18) is configured to calculate, based on the time difference, a distance between the nozzle (14) and a point of incidence of the laser beam (12) on the workpiece (11), and/or a distance between the aperture (19) and the point of incidence.

9. The apparatus (10) according to one of the claims 1 to 8, wherein the vibration sensor (17) is attached to and in direct contact with an outside surface of the housing (16), or is attached to an adaptor (42) that is mounted onto the outside surface of the housing (16).

10. The apparatus (10) according to one of the claims 1 to 9, wherein:
the housing (16) comprises a first part (16a) and a second part (16b), the first part (16a) being removably attached to the second part (16b);
the second part (16b) of the housing (16) comprises the at least one lens (15);
the first part (16a) of the housing (16) comprises the nozzle (14) and a liquid chamber (21) situated above the nozzle (14); and
the vibration sensor (17) is arranged at the first part (16a) of the housing (16) on the liquid chamber (21) above the nozzle (14).

11. The apparatus (10) according to one of the claims 1 to 10, wherein at least one parameter of the first set (p1) is indicative of one or more of the following:
a material type of the workpiece (11);
a material removal velocity or a material removal rate of removing workpiece material by machining the workpiece (11) with the laser beam (12);
whether the laser beam (12) has broken through the workpiece (11).

12. The apparatus (10) according to one of the claims 1 to 11, wherein at least one parameter of the second set (p2) is indicative of one or more of the following:
a jet quality of the liquid jet (13) and/or a laminar length of the liquid jet (13);
a flow characteristic of the liquid jet (13);
whether the laser beam (12) impinges onto the nozzle (14) or not;
whether the liquid jet (13) touches the edge of a collision object (81) arranged in the vicinity of the workpiece (11) or touches the workpiece (11) itself.

13. The apparatus (10) according to one of the claims 1 to 12, further comprising:
an acoustic transducer (61), which is arranged and configured to send a sound wave (62) through the liquid jet (13) onto the workpiece (11);
wherein the vibration sensor (17) is further configured to measure a third vibration, which is caused by the sound wave (62) being reflected back from the workpiece (11) through the liquid jet (13) into the housing (16).

14. The apparatus (10) according to one of the claims 1 to 13, further comprising:
one or more photosensors (43, 44), which are respectively configured to detect a first radiation or a second radiation;
wherein the first radiation is caused by machining the workpiece (11) with the laser beam (12), and the second radiation is caused by the laser beam (12) being guided in the liquid jet (13) or by machining the workpiece (11) with the laser beam (12);
wherein the first radiation comprises at least one of: laser light of the laser beam (12) reflected from the workpiece (11), and a secondary radiation emitted by a portion of the workpiece (11) that is machined with the laser beam (12); and
wherein the processor (18) is configured to determine the first set and/or the second set of parameters based additionally on measuring the first radiation and/or the second radiation.

15. The apparatus (10) according to claim 14, wherein the processor (18) is further configured to:
fuse respective output signals (17s, 43s, 44s) of the vibration sensor (17) and the one or more photosensors (43, 44), wherein the output signals (17s, 43s, 44s) are generated based on the measured first and/or second vibrations and the measured first and/or second radiations; and
determine the first set (p1) and/or the second set (p2) based on the fused output signals (17s, 43s, 44s).

16. The apparatus (10) according to claim 15, wherein:
the processor (18) comprises a trained model (51) or a rule-based algorithm and is configured to input the output signals into the trained model (51) or the rule-based algorithm; and
the trained model (51) is configured to fuse the output signals (17s, 43s, 44s), and to determine the first set (p1) and/or the second set (p2) based on the fused output signals (17s, 43s, 44s).

17. The apparatus (10) according to one of the claims 1 to 16, wherein the processor (18) is further configured to adapt at least one working parameter of the laser beam (12) and/or of the liquid jet (13) based on the determined first set (p1) and/or second set (p2) of parameters.

18. A method (70) for machining a workpiece (11) with a laser beam (12) guided by a liquid jet (13), the method (70) comprising:
producing (71) a liquid jet (13) with a nozzle (14);
coupling (72) the laser beam (12) into the liquid jet (13) with at least one lens (15);
measuring (73) at least a first vibration and/or a second vibration of a housing (16), which encloses the nozzle (14);
wherein the first vibration is caused by machining the workpiece (11) with the laser beam (12), and the second vibration is caused by the liquid jet (13); and
determining (74), based on measuring the first vibration and/or the second vibration, a first set of parameters (p1) related to machining the workpiece (11) and/or a second set of parameters (p2) related to the liquid jet (13).

19. The method (70) according to claim 18, wherein the method (70) further comprises modifying at least one working parameter of the laser beam (12) and/or of the liquid jet (13) based on the determined first set and/or second set of parameters (p1, p2).

20. A computer program comprising instructions for controlling the apparatus (10) according to one of the claims 1 to 17 when the instructions are executed by the processor (18), or for performing the method (70) according to claim 18 or 19 when the instructions are executed by a computer.
